# EUROPEAN PATENT SPECIFICATION

(11) **EP 0 829 340 B1**
(45) Date of publication and mention of the grant of the patent: **13.09.2000**
(21) Application number: 97113028.1
(22) Date of filing: 29.07.1997
(51) Int. Cl.: B29C 59/02, B29C 59/08, B29D 23/20, B65D 35/08, B29C 59/04

(54) **A method of decorating multilayered plastic tubes**
Verfahren zum Verzieren von mehrschichtigen Kunststoffrohren
Méthode pour décorer des tubes plastiques multicouches

(30) Priority: 13.09.1996 US 713807
(43) Date of publication of application: 18.03.1998
(73) Proprietor: COURTAULDS PACKAGING INC., Florence, KY 41042 (US)
(72) Inventor: Kieras, Ronald E., Woodstock, Illinois 60098 (US)
(74) Representative: Frankland, Nigel Howard

(56) References cited:
- EP-A- 0 322 512
- EP-A- 0 577 577
- EP-A- 0 676 251
- EP-A- 0 677 374
- DE-A- 3 630 788
- FR-A- 2 377 263
- JP-A- 8 127 064
- JP-A- 63 306 024
- US-A- 5 069 856
- US-A- 5 238 642
- US-A- 5 322 658

## Description

**THE PRESENT INVENTION** relates to a method of forming a decorative feature in the outer surface of the side wall of a multi-layered tube, where the tube is formed from a longitudinally stretched, extruded, thermoplastic cylinder having at least two layers which are composed of different thermoplastic materials.

The invention also relates to a decorated multi-layered tube.

Squeeze tubes formed from thermoplastic materials are extensively used in the packaging of consumer products such as cosmetics, toothpaste, shampoo, foodstuffs and the like. Often, such tubes are formed from an extruded cylinder of thermoplastic material layers that have been extruded and longitudinally stretched in the axial direction, the layers of thermoplastic materials having different physical properties and being secured together by a thin layer of adhesive material to provide a cohesive tubular unit. The longitudinally stretched, extruded, thermoplastic cylinder is then cut to length for use in making tubes and a head is formed on the tube at one end. Examples of the formation of a head on a tube are described, for example, in US-A-3,047,910 and in US-A-5,069,856. A tube according to the preamble of claim 12 is known from US-A-5,238,642.

Since squeeze tubes are often used for packaging of retail products, the formation of decorative features as well as other indicia on the tubes is very important so that the tube is pleasing to the eye. Various decorative processes have been developed, such as printing on the tube surface, or the application of a decorative foil in combination with printed matter, such as described in US-A-4,484,970 and other processes.

It is an object of the present invention to provide a method of forming a tactile decorative feature on a tube formed from a longitudinally stretched extruded, thermoplastic tube of at least two different thermoplastic materials.

It is another object to provide a method of forming a tactile decorative feature in a tube formed from a longitudinally stretched, extruded, thermoplastic tube of at least two different thermoplastic materials where an outer layer of thermoplastic material contains said decorative feature while the inner surface of an adhered layer of thermoplastic material remains substantially smooth.

According to this invention there is provided a method according to claim 1.

In the preferred embodiments of the invention a decorative feature is formed in the side wall of a longitudinally stretched, extruded, thermoplastic tube which is comprised of at least two different thermoplastic layers. A longitudinally stretched, extruded, thermoplastic tube is formed from at least two different thermoplastic layers which comprise an outer layer of a first thermoplastic material, such as a low density polyethylene, and an adhered inner layer of a second thermoplastic material different from the first material, such as a high density polyethylene, the adhered layer having a softening temperature higher than the softening temperature of the outer layer.

A selected portion of the outer layer of the thermoplastic tube is heated to a temperature that is sufficient to soften and allow displacement of sections of the outer layer so as to produce a decorative feature on the side wall of the tube without causing substantial deformation of the adhered inner layer. The heating of the selected portion of the outer layer may be effected by contacting a heated die, carrying the decorative feature, with the outer layer or by heating the outer layer, such as by application of a hot fluid, for example hot air, and contacting the heated selected portion with an embossing die.

The adhered inner layer may comprise a high density polyethylene and the outer layer may comprise a low density or ultra-low density polyethylene. The selected portion of the side wall of the tube is preferably heated to a temperature greater than about 76.6°C, and most preferably to a temperature greater than about 87.7°C with the best results being achieved when the selected portion of the side wall of the tube is heated to a temperature of between about 110 to 126.6°C.

Further embodiments are defined independent claims 2-11.

A further embodiment of the invention provides a tube according to claims 12 to 15.

The present method will be more fully understood by reference to the following description and the accompanying drawings of embodiments thereof, which is given by way of example, wherein:
FIGURE 1 is a schematic illustration of one embodiment of the method of the present invention,
FIGURE 2 is a cross-sectional view of a portion of the side wall of a tube decorated by the method of the present invention described with reference to Figure 1,
FIGURE 3 is a plan view of the side wall of the tube illustrated in Figure 2, and
FIGURE 4 is a schematic illustration of a step in a further embodiment of a method of the present invention wherein a selected portion of the side wall is heated prior to contact with a die carrying a decorative feature.

The tube that is decorated is a longitudinally stretched, extruded, thermoplastic tube which may be formed from various thermoplastic materials, such as polyethylene, polypropylene, polyvinyl chloride, and the like. The tube is formed from multi-layers or laminates of different thermoplastic materials,m with adhesive layers preferably provided between two continuous layers to bond the layers together. The longitudinally stretched, extruded, thermoplastic cylinder from which the tube is initially formed is produced from a tubular extrusion which has a wall thickness in the molten state that is two to three times the wall thickness of the final cooled extruded thickness. Such a tubular extrusion is formed by extruding the layers of thermoplastic material, and any adhesive, from an extrusion annulus in a molten state and stretching the hot tubular form, in the direction of the longitudinal axis thereof, into a cylinder having a wall thickness one-half to one-third, or less, than the extrusion annulus. Such extrusion and stretching techniques are known, and further described in US-A-5,069,856.

The longitudinally stretched, extruded, thermoplastic cylinder is formed from at least two different adhered layers of thermoplastic material, an outer layer of a first thermoplastic material and an adhered inner layer of a second thermoplastic material which is different from the material of the first layer. The adhered inner layer has a softening temperature that is greater than the softening temperature of the outer layer. The outer layer may, for example, be a low density polythene, identified by ASTM standards as having a density of between about 0.910 to 0.925 g/cc, while the adhered layer may, for example, be a high density polyethylene, identified by ASTM standards as having a density of between about 0.941 to 0.959 g/cc. Alternatively the outer layer may be an ultra low density polyethylene, generally described by ASTM standards as having density of about 0.905 or below, and the adhered layer may be a high density polyethylene.

Tubes formed from such longitudinally stretched, extruded, thermoplastic cylinders will generally have a side wall of a thickness of about 0.254 mm to 1.27 mm (0.010 to 0.050 inch) preferably about 0.030 mm to 0.508 mm (0.012 to 0.020 inch) with the outer layer having a thickness of between about 0.005 to 0.254 mm (0.002 to 0.010 inch) preferably between about 0.005 to 0.012 mm (0.002 to 0.005 inch) and the adhered layer having a thickness of between about 0.020 to 0.101 mm (0.008 to 0.040 inch), preferably between about 0.020 to 0.050 mm (0.008 to 0.020 inch),. An adhesive layer may be used to secure the outer layer and adhered layer together and is very thin, usually between about 0.0005 to 0.003 mm (0.0002 to 0.0015 inch) in thickness.

The side wall of the tube is heated to a temperature sufficient to soften and allow displacement of selected parts of the outer layer of tube to produce a decorative feature therein without causing any substantial deformation or displacement of the adhered inner layer. Selected portions of the side wall are heated to the desired temperature and displacement of sections of the softened outer layer are effected by contact with an embossing die carrying the desired decorative feature. The pressure of contact and time of contract of the die, as well as the specific temperatures used will depend on the thermoplastic material of the tube and are readily determined to produce a desired displacement. For example, with a tube having a side wall composed of an inner (adhered) layer of a high density polyethylene polymer, such as (Alathon L5045 by Occidental Chemical Corp.) and an outer layer of low density polyethylene polymer, such as (Dupont 2020T by Du Pont De Nemours E I & Co.) heating of the outer tube wall to a temperature of at least about 76.6° to 79.4°C (170-175°F) is required to produce a decorative feature therein. At a temperature of about 87.7°C (190°F) a more definitive displacement and clear impression or decorative feature is achieved. Optimum results are achieved at a temperature of about 110 to 126.6°C (230-260°F) while heating to a temperature above about 137.7 to 143.3°C (280-290°F) can result in distortion of the tube wall.

The selected portion of the side wall of the tube may be raised to the desired elevated temperature preferably by contacting the outer layer of the tube with a heated die carrying the decorative feature. Alternatively, the outer layer of the tube may be heated by applying heat to the selected portion, such as by contacting the outer layer with a stream of hot fluid, such as hot air, and then contacting the heated selected portion with a die carrying the decorative feature. If desired, a combination of use of a hot fluid and a heated die carrying the decorative feature may be used.

The present description, will refer to an outer layer and adhered inner layer forming the wall of the tube, while it is to be understood that an additional layer or layers maybe provided on the surface of the adhered layer opposite the outer layer. For example, a further thermoplastic layer may be adhesively or otherwise secured to the exposed inner-most surface of the adhered inner layer without affecting the decorative method. Whether such additional layers are present or not, however, an advantage of the present invention lies in the fact that the decoration of the outer layer of the tube is a textured or tactile, i.e. perceptible by touch, surface, while the inner surface of the tube will be unaffected and still provides a smooth surface for flow of the contents of the tube therealong for dispersal from the tube.

Reference is now made to the drawings which schematically illustrate the embodiments of the present process.

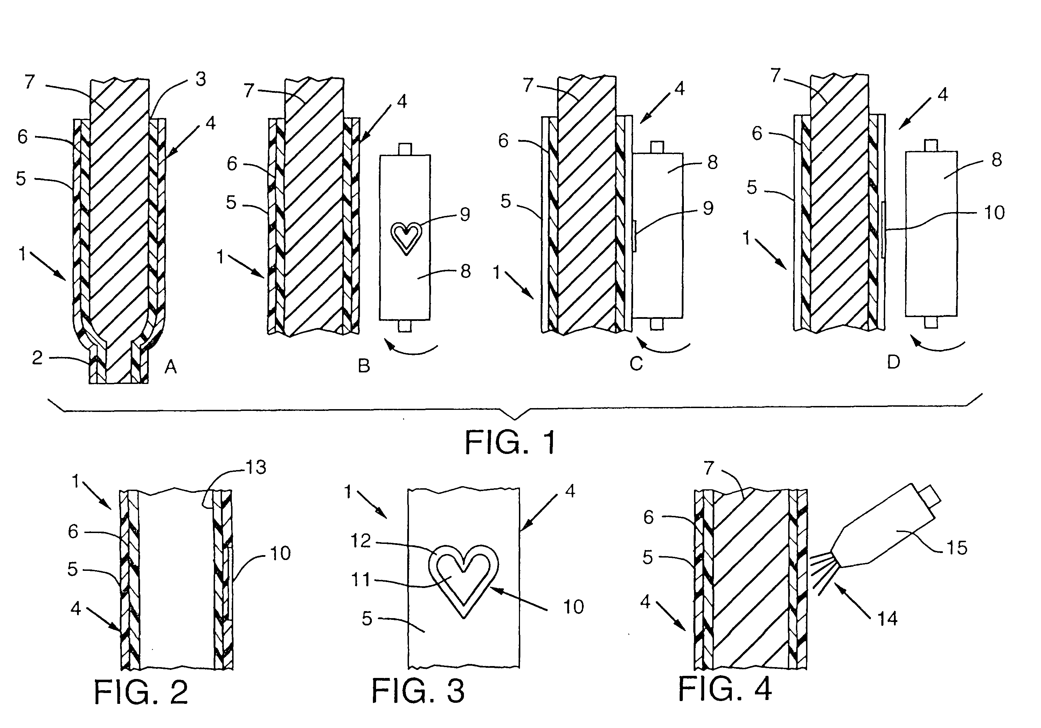

In Figure 1, (A) illustrates a tube 1 formed from a longitudinally stretched, extruded, thermoplastic tube having a head 2 formed at one end and an open end 3 at the other end, the side wall 4 of the tube being formed from two different adhered layers, an outer layer 5 of a first thermoplastic material and an adhered inner layer 6 of a second thermoplastic material that has a softening temperature greater than the softening temperature of the outer layer 5, the tube 1 being supported on a mandrel 7. As shown at (B) of Figure 1, the tube 1, carried by mandrel 7 is brought into proximity to a die 8, which die may be a flat or concave shape that reciprocates towards and away from the tube, but is preferably a roller that is rotated as shown by the arrow. The die 8 carries a decorative feature 9 that is to be formed in the side wall 4 of the tube 1, the die having been heated to a temperature sufficient to heat the tube side wall 4 and displace sections of the tube side wall outer layer 5. As shown at (C) of Figure 1, the heated die 8 is brought into contact with the side wall 4 of the tube 1 and heats the same so as to raise the temperature of the outer layer 5 and thus softens the outer layer to allow displacement of heated sections of the outer layer 5 and produce the decorative feature 10 therein of a design the same as the decorative feature 9 carried on die 8. The die 8 is then removed from contact with the side wall 4 of tube 1 and the tube cooled such that the decorative feature 10 remains in the outer layer 5 of the side wall 4, as illustrated in Figures 2 and 3.

In Figure 3, the decorative feature, illustrated as a heart-shaped design, shows a land 11 and recess 12 formed by softening and displacing a section of the outer layer 5 of the side wall 4. As shown in Figure 2, the formation of the decorative feature 10 in outer layer 5 is effected without causing any substantial deformation of the adhered inner layer 6, such that the inner surface 13 of the adhered layer 6 remains smooth and substantially undisturbed.

In an alternate embodiment of the present invention, rather than heating the die 8 and contacting the heated die with the outer layer 5 of the side wall 4 of tube 1, a selected portion only of outer layer 5 may be heated, such as by application of a flow of heated fluid 14, preferably hot air, from a source 15 as illustrated in Figure 4. The selected portion of the outer layer 5, after heating by a hot fluid to raise the temperature of the outer layer to a temperature sufficient such that contact of a die 8 carrying a decorative feature 9 will displace sections of the heated selected portion of the outer layer, is then brought into contact with the die 8 carrying decorative feature 9. The contact of the die 8 with the heated side wall 4 will then form the decorative feature 10 in the outer layer 5 without causing any substantial deformation of the adhered inner layer 6.

It is to be understood that as a further embodiment, the die 8 may be heated and also a selected portion of the side wall 4 may be heated by a hot fluid prior to contact to the heated die 8 carrying decorative feature 9 with the heated selected portion of the side wall 4.

As an illustration of the temperature used in the present method, thermoplastic tubes were formed having a two layer structure. The tube had a low density polyethylene outer layer and a high density polyethylene adhered or inner layer. In order to form a decorative feature in the outer layer, a temperature of the outer layer of about 76.6 to 794°C (170-175°F) was required, with a clear defined "melted" impression being obtained at a temperature of above about 87.7°C (190°F). At a temperature of between about 110 to 126.6°C (230-260°F) an optimum "melted" impression was formed in the outer layer. Temperatures in excess of about 137.7°C (280°F) result in distortion of the tube and thus were found not to be usable.

An advantage of the present decorative method is the ability to form a decorative feature over an existing decoration or indicia that may already be present on the side wall of the tube. Thus, an existing decoration may be altered or enhanced by use of the present method. Also, where the outer layer and the adhered layer of thermoplastic materials are of different colours, the displacement of sections of the outer layer to form the decorative feature can result in different hues or colour contrasts being produced in the decorative feature.

## Claims

1. A method of forming a decorative feature (10) into the side wall of a thermoplastic tube (1) from a longitudinally stretched, extruded, thermoplastic tube, comprising at least two different thermoplastic layers (5,6), the tube having an outer layer (5) of a first thermoplastic material, and an adhered inner layer (6) of a second thermoplastic material different from said first material, said adhered inner layer (6) having a softening temperature greater than the softening temperature of said outer layer, wherein the two layers (5) (6) are formed having different colours, at least a selected portion of the side wall (4) of the tube is heated to raise the temperature of said outer layer to a temperature sufficient such that contact of a die (8) carrying a decorative feature (10) will displace sections of the heated selected portion of said outer layer and produce said decorative feature therein, without causing substantial deformation of said adhered inner layer (5), and contacting the heated side wall (4) of said tube with said die (8) will form a decorative feature (10) therein with different hues or colour contrasts therein.

2. The method as defined in claim 1 wherein said heating is effected by contacting said outer layer (5) with a heated die (8) carrying said decorative feature.

3. The method as defined in claim 1, wherein said heating is effected by applying heat (14) to said selected portion with a die (8) carrying said decorative feature.

4. The method as defined in claim 1 wherein said heating is effected by applying heat (14) to said selected portion only of said outer layer (5) and contacting said outer layer with a heated said die (8).

5. The method of claim 3 or 4 wherein the step of applying heat to the selected portion of the outer layer (5) is effected by applying a hot fluid thereto.

6. The method as defined in any one of the preceding claims wherein said adhered inner layer (6) comprises a high density polyethylene and said outer layer (8) comprises a low density polyethylene.

7. The method as defined in claim 6 wherein said outer layer (5) comprises an ultra low density polyethylene.

8. The method as defined in claims 6 or 7 wherein said outer layer (5) has a thickness of between about (0.005 to 0.254mm) (0.002 to 0.010 inch) and said adhered inner layer (6) has a thickness of between about 0.020 to 0.050 (0.008 to 0.040 inch).

9. A method as defined in claim 6, 7 or 8 wherein said selected portion of the side wall of the tube is heated to a temperature greater than about 76.6°C (170°F).

10. The method as defined in claim 9 wherein said selected portion of the side wall of the tube is heated to a temperature greater than about 87.7°C (190°F).

11. The method as defined in claim 10 wherein said selected portion of the side wall of the tube is heated to a temperature of between about 110 to 126.6°C (230-260°F).

12. A thermoplastic tube (1) formed from a longitudinally stretched, extruded, thermoplastic cylinder, having a side wail comprised of at least two different thermoplastic layers (5, 6) and having an outer layer (5) of a first thermoplastic material and an adhered inner layer (6) having a softening temperature greater than the softening temperature of said outer layer (5), characterised in that the two layers forming said side wall have different colours and the side wall has a decorative feature (10) formed therein by displacement of selected portion of said outer layer without substantial deformation of said adhered layers to produce a feature having a different hue or colour contrast.

13. The thermoplastic tube as defined in claim 12 wherein said adhered layer comprises a high density polyethylene and said outer layer comprises low density polyethylene.

14. The thermoplastic tube as defined in claim 13 wherein said adhered layer comprises a high density polyethylene and said outer layer comprises an ultra low density polyethylene.

15. The thermoplastic tube as defined in claim 13 or 14 wherein said outer layer has a thickness of between about 0.005 to 0.254 mm (0.002 to 0.010 inch) and said adhered layer has a thickness of between about 0.020 to 0.050 (0.008 to 0.040 inch).

## Patentansprüche

1. Verfahren zum Bilden einer dekorativen Eigenschaft (10) in der Seitenwand eines thermoplastischen Rohres (1) aus einem longitudinal gestreckten, extrudierten, thermoplastischen Rohr, umfassend wenigstens zwei unterschiedliche thermoplastische Schichten (5, 6), wobei das Rohr eine äußere Schicht (5) aus einem ersten thermoplastischen Material aufweist und eine angeklebte innere Schicht (6) aus einem zweiten thermoplastischen Material, welches von dem ersten Material verschieden ist, wobei die angeklebte innere Schicht (6) eine Erweichungstemperatur aufweist, die größer ist als die Erweichungstemperatur der äußeren Schicht, dadurch gekennzeichnet, daß die zwei Schichten (5, 6) mit unterschiedlichen Farben gebildet werden, wenigstens ein ausgewählter Teil der Seitenwand (4) des Rohres erwärmt wird, um die Temperatur der äußeren Schicht auf eine Temperatur anzuheben, die ausreichend ist, so daß Berührung eines Prägestempels (8), der eine dekorative Eigenschaft (10) trägt, Bereiche des erwärmten ausgewählten Teils der äußeren Schicht verdrängt und die dekorative Eigenschaft darin erzeugt, ohne eine wesentliche Deformation der angeklebten inneren Schicht (5) zu bewirken, und Berühren der erwärmten Seitenwand (4) des Rohres mit dem Prägestempel (8) eine dekorative Eigenschaft (10) darin mit unterschiedlichen Farbtönen oder Farbkontrasten darin bildet.

2. Verfahren nach Anspruch 1, dadurch gekennzeichnet, daß
das Erwärmen bewirkt wird durch Berühren der äußeren Schicht (5) mit einem erwärmten Prägestempel (8), der die dekorative Eigenschaft trägt.

3. Verfahren nach Anspruch 1, dadurch gekennzeichnet, daß
das Erwärmen bewirkt wird durch Aufbringen von Wärme (14) auf den ausgewählten Teil mit einem Prägestempel (8), der die dekorative Eigenschaft trägt.

4. Verfahren nach Anspruch 1, dadurch gekennzeichnet, daß
das Erwärmen bewirkt wird durch Aufbringen von Wärme (14) auf den ausgewählten Teil lediglich der äußeren Schicht (5) und Berühren der äußeren Schicht mit dem erwärmten Prägestempel (8).

5. Verfahren nach Anspruch 3 oder 4, dadurch gekennzeichnet, daß
der Schritt des Aufbringens von Wärme auf den ausgewählten Teil der äußeren Schicht (5) bewirkt wird durch Aufbringen eines heißen Fluids auf dieselbe.

6. Verfahren nach einem der vorangehenden Ansprüche, dadurch gekennzeichnet, daß die angeklebte innere Schicht (6) ein Polyethylen hoher Dichte umfaßt und die äußere Schicht (8) ein Polyethylen niedriger Dichte umfaßt.

7. Verfahren nach Anspruch 6, dadurch gekennzeichnet, daß
die äußere Schicht (5) ein Polyethylen mit ultra-niedriger Dichte umfaßt.

8. Verfahren nach einem der Ansprüche 6 oder 7, dadurch gekennzeichnet, daß die äußere Schicht (5) eine Dicke von zwischen etwa 0,005 bis 0,254 mm (0,002 bis 0,010 inch), und die angeklebte innere Schicht (6) eine Dicke von zwischen etwa 0,020 bis 0,050 (0,008 bis 0,040 inch) aufweist.

9. Verfahren nach einem der Ansprüche 6, 7 oder 8, dadurch gekennzeichnet, daß der ausgewählte Teil der Seitenwand des Rohres auf eine Temperatur größer als etwa 76,6°C (170°F) erwärmt wird.

10. Verfahren nach Anspruch 9, dadurch gekennzeichnet, daß
der ausgewählte Teil der Seitenwand des Rohres auf eine Temperatur größer als etwa 87,7°C (190°F) erwärmt wird.

11. Verfahren nach Anspruch 10, dadurch gekennzeichnet, daß
der ausgewählte Teil der Seitenwand des Rohres auf eine Temperatur zwischen etwa 110 bis 126,6°C (230 - 260°F) erwärmt wird.

12. Thermoplastisches Rohr (1), geformt aus einem longitudinal gestreckten, extrudierten, thermoplastischen Zylinder, mit einer Seitenwand, umfaßt von wenigstens zwei unterschiedlichen thermoplastischen Schichten (5, 6), und mit einer äußeren Schicht (5) aus einem ersten thermoplastischen Material und einer angeklebten inneren Schicht (6) mit einer Erweichungstemperatur, die größer ist als die Erweichungstemperatur der äußeren Schicht (5), dadurch gekennzeichnet, daß
die zwei Schichten, die die Seitenwand bilden, unterschiedliche Farben aufweisen und die Seitenwand eine dekorative Eigenschaft (10) aufweist, gebildet auf derselben durch Verdrängung eines ausgewählten Teils der äußeren Schicht ohne eine wesentliche Deformation der angeklebten Schichten, um eine Eigenschaft mit einem unterschiedlichen Farbton oder Farbkontrast zu erzeugen.

13. Thermoplastisches Rohr nach Anspruch 12, dadurch gekennzeichnet, daß
die angeklebte Schicht ein Polyethylen hoher Dichte umfaßt und die äußere Schicht Polyethylen niedriger Dichte umfaßt.

14. Thermoplastisches Rohr nach Anspruch 13, dadurch gekennzeichnet, daß
die angeklebte Schicht ein Polyethylen hoher Dichte umfaßt und die äußere Schicht ein Polyethylen ultra-niedriger Dichte umfaßt.

15. Thermoplastisches Rohr nach einem der Ansprüche 13 oder 14, dadurch gekennzeichnet, daß
die äußere Schicht eine Dicke von zwischen etwa 0,005 bis 0,254 mm (0,002 bis 0,010 inch) aufweist und die angeklebte Schicht eine Dicke von zwischen etwa 0,020 bis 0,050 (0,008 bis 0,040 inch) aufweist.

## Revendications

1. Procédé de formation d'un motif décoratif (10) dans la paroi latérale d'un tube thermoplastique (1) à partir d'un tube thermoplastique extrudé, longitudinalement étiré, comprenant au moins deux couches thermoplastiques différentes (5, 6), le tube ayant une couche externe (5) d'une première substance thermoplastique, et une couche interne collée (6) d'une seconde substance thermoplastique différente de ladite première substance, ladite couche interne collée (6) ayant une température d'amollissement supérieure à la température d'amollissement de ladite couche externe (5), dans lequel les deux couches (5) (6) sont formées avec des couleurs différentes, au moins une partie choisie de la paroi latérale (4) du tube est chauffée pour élever la température de ladite couche externe jusqu'à une température suffisante de sorte que le contact d'une matrice (8) portant un motif décoratif (10) déplacera des zones de la partie choisie chauffée de ladite couche externe et produira ledit motif décoratif sur celle-ci, sans provoquer de déformation sensible de ladite couche interne collée (5) et, en mettant en contact la paroi latérale chauffée (4) dudit tube avec ladite matrice (8), formera un motif décoratif (10) sur celle-ci avec différentes teintes ou contrastes de couleur.

2. Procédé tel que défini dans la revendication 1, dans lequel ledit chauffage est effectué en mettant en contact ladite couche externe (5) avec une matrice chauffée (8) portant ledit motif décoratif.

3. Procédé tel que défini dans la revendication 1, dans lequel ledit chauffage est effectué en appliquant de la chaleur (14) à ladite partie choisie avec une matrice (8) portant ledit motif décoratif.

4. Procédé tel que défini dans la revendication 1, dans lequel ledit chauffage est effectué en appliquant de la chaleur (14) à ladite partie choisie uniquement de ladite couche externe (5) et en mettant en contact ladite couche externe avec ladite matrice chauffée (8).

5. Procédé selon la revendication 3 ou 4, dans lequel l'étape consistant à appliquer de la chaleur à la partie choisie de la couche externe (5) est effectuée en appliquant sur celle-ci un fluide chaud.

6. Procédé tel que défini dans l'une quelconque des revendications précédentes dans lequel ladite couche interne collée (6) comprend un polyéthylène de haute densité et ladite couche externe (5) comprend un polyéthylène de densité basse.

7. Procédé tel que défini dans la revendication 6, dans lequel ladite couche externe (5) comprend un polyéthylène de densité ultra basse.

8. Procédé tel que défini dans les revendications 6 ou 7, dans lequel ladite couche externe (5) présente une épaisseur entre 0,05 mm environ et 0,254 mm environ (0,002 à 0,010 pouce) et ladite couche interne collée (6) présente une épaisseur entre 0,2 mm environ et 1 mm environ (0,008 à 0,040 pouce).

9. Procédé tel que défini dans les revendications 6, 7 ou 8, dans lequel ladite partie choisie de la paroi latérale du tube est chauffée à une température supérieure à 76,6°C environ (170°F).

10. Procédé tel que défini dans la revendication 9, dans lequel ladite partie choisie de la paroi latérale du tube est chauffée à une température supérieure à 87,7°C environ (190°F).

11. Procédé tel que défini dans la revendication 10, dans lequel ladite partie choisie de la paroi latérale du tube est chauffée à une température entre environ 110°C et 126,6°C (230 - 260°F).

12. Tube thermoplastique (1) formé à partir d'un cylindre thermoplastique extrudé, allongé longitudinalement, ayant une paroi latérale constituée d'au moins deux couches thermoplastiques différentes (5, 6) et ayant une couche externe (5) d'une première substance thermoplastique et une couche interne collée (6) ayant une température d'amollissement supérieure à la température d'amollissement de ladite couche externe (5), caractérisé en ce que les deux couches formant ladite paroi latérale présentent des couleurs différentes et en ce que la paroi latérale présente un motif décoratif (10) formé sur celle-ci par déplacement d'une partie choisie de ladite couche externe sans déformation sensible desdites couches collées pour produire un motif ayant une teinte différente ou un contraste de couleur.

13. Tube thermoplastique tel que défini dans la revendication 12 dans lequel ladite couche collée comprend un polyéthylène de haute densité et ladite couche externe comprend un polyéthylène de densité basse.

14. Tube thermoplastique tel que défini dans la revendication 13 dans lequel ladite couche collée comprend un polyéthylène de haute densité et ladite couche externe comprend un polyéthylène de densité ultra basse.

15. Tube thermoplastique tel que défini dans les revendications 13 ou 14, dans lequel ladite couche externe présente une épaisseur entre 0,05 mm environ et 0,254 mm environ (0,002 à 0,010 pouce) et ladite couche collée présente une épaisseur entre 0,2 mm environ et 1 mm environ (0,008 à 0,040 pouce).
